# FASCICULE DE BREVET EUROPEEN

(11) **EP 3 356 946 B1**
(45) Date de publication et mention de la délivrance du brevet: **25.08.2021**
(21) Numéro de dépôt: 16777724.2
(22) Date de dépôt: 14.09.2016
(51) Int. Cl.: G06F 13/42, G07C 5/08, G06F 11/00

(54) **PROCEDE DE DIAGNOSTIC D'UN ACTIONNEUR ELECTRIQUE RELIE A UN CALCULATEUR**
VERFAHREN ZUR DIAGNOSE EINES AN EINEN COMPUTER ANGESCHLOSSENEN ELEKTRISCHEN AKTUATORS
METHOD FOR DIAGNOSING AN ELECTRICAL ACTUATOR CONNECTED TO A COMPUTER

(30) Priorité: 02.10.2015 FR 1559375
(43) Date de publication de la demande: 08.08.2018
(73) Titulaire: PSA Automobiles SA, 78300 Poissy (FR)
(72) Inventeur: ATTABOU, Thami, 27120 Pacy sur Eure (FR)
(86) Numéro de dépôt international: PCT/FR2016/052312
(87) Numéro de publication internationale: WO 2017/055702

(56) Documents cités:
- EP-A2- 1 153 782
- DE-A1- 4 040 927
- FR-A1- 2 821 161

## Description

La présente invention se rapporte à la transmission de données. L'invention porte plus particulièrement sur un procédé de diagnostic d'un actionneur électrique relié à un calculateur.

Dans un véhicule, le calculateur de contrôle moteur est relié par une ligne de commande à divers organes électriques comme par exemple un module comprenant une pompe à carburant. Ainsi le calculateur pilote le module pompe à carburant par l'intermédiaire de signaux de commande transmis via la ligne de commande. En retour, le module est également relié au calculateur par une ligne de diagnostic et le module pompe à carburant comprend une unité de diagnostic qui détecte et transmet au calculateur des signaux représentatifs de défauts. Le calculateur comprend classiquement une mémoire dans laquelle il enregistre les signaux représentatifs des défauts détectés. La lecture ultérieure, en après-vente par exemple, de cette mémoire par un outil de diagnostic permet à un opérateur de déterminer le défaut incriminé.

Toutefois, dans le cas où le calculateur n'est pas prévu pour inscrire en mémoire l'ensemble des défauts détecté par l'unité de diagnostic, le ou les défauts pour lesquels il n'est pas prévu que le calculateur les enregistre en mémoire n'apparaissent pas à la lecture de cette mémoire.

On connait par exemple du document EP0440942 un procédé pour mettre à disposition au moins deux informations concernant l'état de fonctionnement d'un moteur à combustion interne dans lequel on additionne dans chaque période la largeur des impulsions des deux informations. Cependant une telle technique n'est pas assez discriminante pour identifier ultérieurement, en particulier en après-vente, le défaut non reconnu par le calculateur. On connait encore du document DE4040927A1 un procédé de diagnostic d'un actionneur relié à un calculateur correspondant au préambule de la revendication 1.

Par conséquent, le problème à la base de l'invention est de rendre visible le défaut non enregistré par le calculateur pour une ultérieure opération de maintenance en après-vente.

Pour résoudre ce problème, il est prévu selon l'invention un procédé de diagnostic d'un actionneur électrique relié à un calculateur,
- l'actionneur électrique comportant un module de diagnostic agencé pour détecter un nombre déterminé de défauts de fonctionnement de l'actionneur et délivrer pour chacun de ces défauts un signal représentatif du défaut détecté,
- le calculateur comprenant une mémoire et étant prévu pour inscrire dans cette mémoire le signal de défaut d'un nombre de défauts de fonctionnement de l'actionneur inférieur au nombre déterminé de défauts de fonctionnement de l'actionneur que le module peut détecter,

caractérisé en ce que lorsqu'un défaut non inscrit par le calculateur est détecté par le module de diagnostic, ce dernier émet vers le calculateur une séquence dans laquelle se succède en alternance régulière le signal d'un défaut dont l'inscription est prévue par le calculateur et le signal du défaut dont l'inscription n'est pas prévue par le calculateur et le calculateur enregistre la séquence dans la mémoire.

L'effet technique est d'obtenir une trame avec ses ruptures déterminées dans la succession des signaux que forme alors une signature révélatrice du défaut dont l'inscription n'est pas prévue par le calculateur. Ainsi, si à la lecture ultérieure de la mémoire cette trame est identifiée elle révèle l'occurrence du défaut dont l'inscription n'est pas prévue par le calculateur.

Diverses caractéristiques supplémentaires peuvent être prévues, seules ou en combinaisons :
En variante, l'alternance régulière a une période d'alternance supérieure à une seconde et de préférence la période d'alternance est égale à deux secondes.
En variante, le procédé comprend l'enregistrement de la séquence suite à un délai de validation.
En variante, le délai de validation est compris entre une minute et cinq minutes, et de préférence le délai de validation est égal a une minute.

Dans une variante où l'ensemble comprend de plus une alimentation électrique de l'actionneur et des moyens d'ouverture/fermeture de cette alimentation électrique commandés par la calculateur, lorsque le défaut dont l'inscription n'est pas prévue par le calculateur est détecté par le module de diagnostic, le calculateur commande les moyens d'ouverture/fermeture de sorte à couper l'alimentation électrique de l'actionneur après une durée déterminée suivant la détection de ce défaut.

Dans une variante, la durée déterminée est comprise entre dix et quinze secondes, et de préférence égale à dix secondes.

Dans une variante où la mémoire est destinée à être lue par un outil de diagnostic, le procédé comprend la connexion au calculateur de l'outil de diagnostic, la lecture de la mémoire par l'outil de diagnostic, et, si la séquence est identifiée, l'identification que le défaut dont l'inscription dans la mémoire n'est pas prévue par le calculateur a eu lieu.

L'invention a aussi pour objet un ensemble comprenant un actionneur électrique relié à un calculateur,
- l'actionneur électrique comportant un module de diagnostic agencé pour détecter un nombre déterminé de défauts de fonctionnement de l'actionneur et délivrer pour chacun de ces défauts un signal représentatif du défaut détecté,
- le calculateur comprenant une mémoire et étant prévu pour inscrire dans cette mémoire le signal de défaut d'un nombre de défauts de fonctionnement de l'actionneur inférieur au nombre déterminé de défauts que le module peut détecter,
caractérisé en ce que le module de diagnostic comprend les moyens de production du signal requis pour la mise en œuvre d'un procédé tel que précédemment décrit.

L'invention a aussi pour objet un véhicule caractérisé en ce qu'il comprend un tel ensemble, l'actionneur électrique étant un module comprenant une pompe à carburant.

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un véhicule comprenant un calculateur relié à un module pompe à carburant.
- La figure 2 est une représentation schématique de la transmission des signaux de diagnostic, selon l'invention.

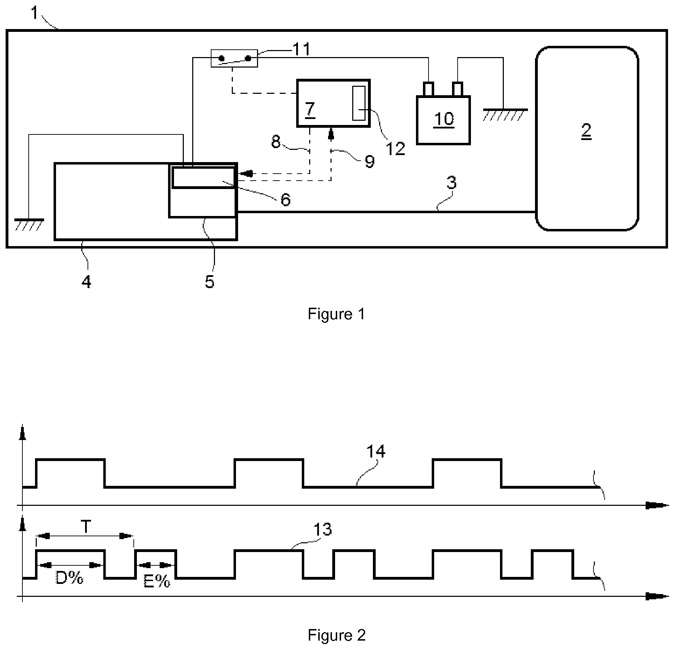

Sur la figure 1, un véhicule automobile 1 est équipé d'un moteur à combustion interne 2 pour pourvoir à son déplacement. Le moteur à combustion interne 2 est indifféremment un moteur à essence ou un moteur Diesel.

Le moteur à combustion interne 2 est équipé d'une ligne d'alimentation en carburant 3 qui relie un réservoir de carburant 4 dont est pourvu le véhicule automobile 1 et le moteur à combustion interne 2. Le réservoir de carburant 4 est équipé d'une pompe à carburant 5 qui est apte à faire circuler un carburant contenu à l'intérieur du réservoir de carburant 4 depuis ce dernier jusqu'au moteur à combustion interne 2.

La pompe à carburant 5 comprend un module 6 de diagnostic et est reliée à un calculateur 7.

Comme illustrée dans le tableau 1 ci-dessous, le module 6 de diagnostic est agencé pour détecter un nombre déterminé de défauts prédéterminé de fonctionnement de la pompe à carburant 5, ici huit défauts notés de D1 à D8. Le module 6 de diagnostic est également agencé pour délivrer pour chacun de ces défauts un signal représentatif du défaut détecté. Les signaux sont ici notés de S1 à S8. Les signaux S1 à S8 se présentent de préférence sous la forme d'un signal dit PWM (correspondant à l'acronyme anglais « Pulse Width Modulation » encore désigné Rapport Cyclique d'Ouverture (RCO). Les rapports cycliques des signaux S1 à S8 sont tous différents et notés de A% à H% du cycle complet.

**Tableau 1**

| | |
|---|---|
| S1 : PWM A% | D1 |
| S2 : PWM B% | D2 |
| S3 : PWM C% | D3 |
| S4 : PWM D% | D4 |
| S5 : PWM E% | D5 |
| S6 : PWM F% | D6 |
| S7 : PWM G% | D7 |
| S8 : PWM H% | D8 |

Le calculateur 7 est relié par une ligne 8 de commande à la pompe à carburant 5. Ainsi le calculateur 7 pilote la pompe à carburant 5 par l'intermédiaire de signaux de commande transmis via cette ligne 8 de commande.

En retour, le module 6 est également relié au calculateur 7 par une ligne 9 de diagnostic et transmet au calculateur 7 le cas échéant le signal représentatif du défaut détecté.

La pompe à carburant 5 est également alimenté électriquement par exemple à partir d'une batterie 10. Un relais 11 piloté par le calculateur 7 peut être prévu pour l'ouverture/ fermeture de l'alimentation électrique de la pompe à carburant 5.

Le calculateur 7 est agencé pour inscrire dans une mémoire 12 le signal de défaut d'un nombre de défauts de fonctionnement de la pompe à carburant 5 inférieur au nombre déterminé de défauts que le module 6 peut détecter.

Ainsi, dans l'exemple décrit, le module 6 de diagnostic peut détecter huit types de défauts D1 à D8 de fonctionnement de la pompe à carburant 5, toutefois le calculateur 7 est prévu pour inscrire en mémoire 12 les signaux de seulement sept des huit types de défaut que le module 6 transmets lorsque l'un des huit défauts est détecté. Dans l'exemple nous considérerons que le calculateur 7 n'est pas agencé pour inscrire en mémoire 12 le signal S5 du défaut D5. Le défaut D5 peut correspondre à la détection d'un fonctionnement à vide de la pompe à carburant 5.

Cette mémoire 12 est destinée à être lue ultérieurement, pendant par exemple une opération de maintenance un outil de diagnostic que l'on vient connecter au calculateur 7 via une prise de diagnostic, non représentée.

Dans le cas où ce défaut de fonctionnement D5 par le module 6 de diagnostic, afin de le rendre visible pour un opérateur au cours d'une lecture ultérieure de la mémoire 12 par l'outil de diagnostic, conformément à l'invention, il est prévu que le module 6 de diagnostic émette vers le calculateur 7 une séquence dans laquelle se succède le signal d'un défaut dont l'inscription est prévue par le calculateur 7 et le signal du défaut dont l'inscription est non prévue par le calculateur 7. A cet effet, le module 6 de diagnostic comprend les moyens de production du signal requis pour la mise en œuvre du procédé de l'invention.

La figure 2 montre la courbe 13. Lorsque le défaut D5 est détecté par le module 6 de diagnostic, celui transmet au calculateur 7 un signal dont la séquence dans laquelle se succède, de préférence en alternance, le signal du défaut D4 et le signal D5.

Comme illustré par la courbe 13 de la figure 2, on peut prévoir une séquence dans laquelle se succède les signaux S4 et S5 dans une alternance régulière de période T déterminée. Par exemple, la période d'alternance T peut être supérieure à moins une seconde et de préférence égale à deux secondes, pour ne pas prendre en compte des défauts intempestifs qui s'ils étaient pris en compte chargeraient inutilement la mémoire du calculateur 7.

Le calculateur 7 enregistre dans la mémoire 12 la séquence transmise. Cependant puisque le signal D5 n'est pas pris en compte par le calculateur 7, est mémorisée une trame comme illustrée par la courbe 14 de la figure 2, dans laquelle les signaux D5 ont disparus, ce qui fait apparaitre des ruptures déterminées dans la succession des signaux S4.

Cette trame avec ses ruptures déterminées dans la succession des signaux S4 forme alors une signature révélatrice du défaut D5. Ainsi, la lecture de la mémoire 12 faisant apparaitre ces ruptures dans la succession de signaux S4, l'opérateur diagnostique correctement que le défaut de type D5 a eu lieu.

En effet, en cas de détection du défaut D4, le signal S4 est envoyé seul au calculateur 7, et donc la lecture de la mémoire 12 ne faisant pas apparaitre de rupture dans la succession de signaux S4, l'opérateur diagnostique bien l'occurrence d'un défaut de type D4.

On peut prévoir un délai de validation pour discriminer les défauts intempestifs. Ce délai de validation correspond au délai minimum requis pendant lequel l'alternance de chaque signal a lieu pour valider la détection du défaut. Ce délai de validation peut être compris entre une et cinq minutes, et de préférence est égale à une minute. Suite à ce délai de validation, le calculateur 7 enregistre dans la mémoire 12 la séquence transmise.

Afin de protéger la pompe à carburant 5, on peut également prévoir de couper l'alimentation de la pompe à carburant 5, en commandant l'ouverture du relais 11 après une durée déterminée suivant la détection du défaut D5. Cette durée est par exemple comprise entre 10 et 15 secondes et de préférence égale à 10 secondes, afin d'éviter de prendre en compte des défauts intempestifs.

L'invention ne se limite pas à l'exemple décrit, le module jauge pompe peut être remplacé par un autre actionneur électrique, par exemple un alternateur.

L'invention permet de rendre possible l'identification d'un défaut pour lequel il n'est pas prévue que le calculateur garde trace en mémoire et d'éviter des modifications couteuses des instructions logicielles du calculateur.

## Revendications

1. Procédé de diagnostic d'un actionneur électrique relié à un calculateur (7),
- l'actionneur électrique comportant un module (6) de diagnostic agencé pour détecter un nombre déterminé de défauts de fonctionnement de l'actionneur et délivrer pour chacun de ces défauts un signal représentatif du défaut détecté,
- le calculateur (7) comprenant une mémoire (12) et étant prévu pour inscrire dans cette mémoire (12) le signal de défaut d'un nombre de défauts de fonctionnement de l'actionneur inférieur au nombre déterminé de défauts que le module (6) peut détecter,
**caractérisé en ce que** lorsqu'un défaut non inscrit par le calculateur (7) est détecté par le module (6) de diagnostic, ce dernier émet vers le calculateur (7) une séquence dans laquelle se succède en alternance régulière le signal d'un défaut (D4) dont l'inscription est prévue par le calculateur (7) et le signal du défaut (D5) dont l'inscription n'est pas prévue par le calculateur (7) et le calculateur enregistre la séquence dans la mémoire (12).

2. Procédé selon la revendication 1, **caractérisé en ce que** l'alternance régulière a une période (T) d'alternance supérieure à une seconde, de préférence égale à deux secondes.

3. Procédé selon l'une quelconque des revendications précédentes, **caractérisé en ce qu'**il comprend l'enregistrement de la séquence suite à un délai de validation.

4. Procédé selon la revendication 3, **caractérisé en ce que** le délai de validation est compris entre une minute et cinq minutes, de préférence égal à une minute.

5. Procédé selon l'une quelconque des revendications précédentes, **caractérisé en ce que** l'ensemble comprenant de plus une alimentation électrique de l'actionneur et des moyens d'ouverture/fermeture de cette alimentation électrique commandés par la calculateur (7), lorsque le défaut dont l'inscription n'est pas prévue par le calculateur (7) est détecté par le module (6) de diagnostic, le calculateur (7) commande les moyens d'ouverture/fermeture de sorte à couper l'alimentation électrique de l'actionneur après une durée déterminée suivant la détection de ce défaut.

6. Procédé selon la revendication 5, **caractérisé en ce que** la durée déterminée est comprise entre dix et quinze secondes, et de préférence égale à dix secondes.

7. Procédé selon l'une quelconque des revendications précédentes, **caractérisé en ce que** la mémoire (12) étant destinée à être lue par un outil de diagnostic, le procédé comprend la connexion au calculateur (7) de l'outil de diagnostic, la lecture de la mémoire (12) par l'outil de diagnostic, et, si la séquence est identifiée, l'identification que le défaut dont l'inscription dans la mémoire (12) n'est pas prévue par le calculateur (7) a eu lieu.

8. Ensemble comprenant un calculateur (7) et un actionneur électrique relié au calculateur (7),
- l'actionneur électrique comportant un module (6) de diagnostic agencé pour détecter un nombre déterminé de défauts de fonctionnement de l'actionneur et délivrer pour chacun de ces défauts un signal représentatif du défaut détecté,
- le calculateur (7) comprenant une mémoire (12) et étant prévu pour inscrire dans cette mémoire (12) le signal de défaut d'un nombre de défauts de fonctionnement de l'actionneur inférieur au nombre déterminé de défauts que le module (6) peut détecter, **caractérisé en ce que** le module (6) de diagnostic comprend des moyens de production du signal requis pour la mise en œuvre d'un procédé selon l'une quelconque des revendications 1 à 4.

9. Véhicule (1) **caractérisé en ce qu'**il comprend un ensemble selon la revendication 8, l'actionneur électrique étant un module comprenant une pompe à carburant (5).

## Patentansprüche

1. Verfahren zur Diagnose eines an einen Computer (7) angeschlossenen elektrischen Stellantriebs,
- wobei der elektrische Aktuator ein Diagnosemodul (6) umfasst, das dazu ausgelegt ist, eine bestimmte Anzahl von Betriebsfehlern des Aktuators zu erkennen und für jeden dieser Fehler ein den erkannten Fehler repräsentierendes Signal zu liefern,
- wobei der Computer (7) einen Speicher (12) umfasst und dazu ausgelegt ist, in diesen Speicher (12) das Fehlersignal einer Anzahl von Betriebsfehlern des Aktuators zu schreiben, die kleiner sind als die bestimmte Anzahl von Fehlern, die das Modul (6) erkennen kann, **dadurch gekennzeichnet, dass**, wenn ein vom Computer (7) nicht erfasster Fehler vom Diagnosemodul (6) erkannt wird, dieser an den Computer (7) eine Sequenz sendet, in der das Signal eines Fehlers (D4), dessen Registrierung bereitgestellt wird durch den Computer (7) und das Fehlersignal (D5), dessen Registrierung nicht vom Computer (7) bereitgestellt wird und der Computer die Sequenz im Speicher (12) aufzeichnet.

2. Verfahren nach Anspruch 1, **dadurch gekennzeichnet, dass** der regelmäßige Wechsel eine Wechselperiode (T) größer als eine Sekunde, vorzugsweise gleich zwei Sekunden aufweist.

3. Verfahren nach einem der vorhergehenden Ansprüchen, **dadurch gekennzeichnet, dass** es umfasst die Aufzeichnung der Sequenz nach einer Validierungs Verzögerung.

4. Verfahren nach Anspruch 3, **dadurch gekennzeichnet, dass** die Validierungszeit zwischen einer Minute und fünf Minuten beträgt, vorzugsweise gleich einer Minute.

5. Verfahren nach einem der vorhergehenden Ansprüche, **dadurch gekennzeichnet, dass** die Baugruppe weiterhin eine Stromversorgung für den Aktuator und Mittel zum Öffnen/Schließen dieser Stromversorgung umfasst, die durch den Computer (7) gesteuert werden, wenn der Fehler, dessen Eingabe nicht vorgesehen ist für durch den Computer (7) von dem Diagnosemodul (6) erfaßt wird, der Rechner (7) steuert die Öffnungs Schließeinrichtung, um zu unterbrechen den Stromzufuhr zum Stellantrieb nach einer Zeit bestimmt nach der Erfassung des Defekts.

6. Verfahren nach Anspruch 5, **dadurch gekennzeichnet, dass** die bestimmte Dauer zwischen zehn und fünfzehn Sekunden beträgt und vorzugsweise gleich zehn Sekunden ist.

7. Verfahren nach einem der vorhergehenden Ansprüche, **dadurch gekennzeichnet, daß** der Speicher (12) durch ein diagnostisches Werkzeug zu lesen soll, wobei das Verfahren umfasst die Verbindung mit dem Computer (7) des Diagnosewerkzeug, das Lesen des Speichers (12) durch das Diagnosetool und wenn die Sequenz erkannt wird,
die Erkennung, dass der Fehler, dessen Eintrag in den Speicher (12) nicht vom Rechner (7) bereitgestellt wurde erfolgte.

8. Baugruppe bestehend aus einem Computer und einem mit dem Computer verbundenen elektrischen Aktuator (7),
- wobei der elektrische Aktuator ein Diagnosemodul (6) umfasst, das dazu ausgelegt ist, eine bestimmte Anzahl von Betriebsfehlern des Aktuators zu erkennen und für jeden dieser Fehler ein Signal zu liefern, das für den erkannten Fehler repräsentativ ist,
- wobei der Computer (7) einen Speicher (12) umfasst und dazu ausgelegt ist, in diesen Speicher (12) das Fehlersignal einer Anzahl von Betriebsfehlern des Aktuators zu schreiben, die kleiner sind als die bestimmte Anzahl von Fehlern, die das Modul (6) sein kann detektiert wird, **dadurch gekennzeichnet, dass** die Einheit (6) für die Diagnose umfasst die Signalerzeugungsmittel zur Durchführung eines Verfahrens erforderlich, nach einem der Ansprüche 1 bis 4.

9. Fahrzeug (1), **dadurch gekennzeichnet, dass** es eine Baugruppe nach Anspruch 8 umfasst, wobei der elektrische Aktuator ein Modul mit einer Kraftstoffpumpe (5) ist.

## Claims

1. Method for diagnosing an electric actuator connected to a computer (7),
- the electrical actuator comprising a module (6) diagnostic arranged to detect a predetermined number of faults operation of the actuator and deliver for each of these defects a signal representative of the detected defect,
- the computer (7) comprising a memory (12) and being designed to write in this memory (12) the fault signal of a number of operating faults of the actuator less than the determined number of faults that the module (6) can detect, **characterized in that** when a fault not registered by the computer (7) is detected by the module (6) to check, this latter transmits to the computer (7) a sequence in which to succeed alternately regularly on a defect signal (D4) whose registration is provided by the computer (7) and the fault signal (D5) whose registration is not provided by the computer (7) and the computer records the sequence in the memory (12).

2. Method according to claim 1, **characterized in that** the regular alternation has an alternation period (T) greater than one second, preferably equal to two seconds.

3. Method according to any one of the preceding claims, **characterized in that** it comprises the recording of the sequence following a validation period.

4. Method according to claim 3, **characterized in that** the validation period is between one minute and five minutes, for Prefer ence equal to one minute.

5. Method according to any one of the preceding claims, **characterized in that** the assembly further comprising a power supply for the actuator and means for opening/closing this power supply controlled by the computer (7), when the fault the entry of which is not provided for by the computer (7) is detected by the diagnostic module (6), the computer (7) controls the opening/closing means so as to cut off the electrical supply to the actuator after an time determined according to detection of the defect.

6. Method according to claim 5, **characterized in that** the determined duration is between ten and fifteen seconds, and preferably equal to ten seconds.

7. Method according to any one of the preceding claims, **characterized in that** the memory (12) being intended to be read by a diagnostic tool, the method comprises the connection to the computer (7) of the diagnostic tool, the reading of the memory (12) by the diagnostic tool and if the sequence is identified, the identification that the fault whose entry in the memory (12) is not provided by the computer (7) was place.

8. Assembly comprising a computer and an electric actuator connected to the computer (7),
- the electric actuator comprising a diagnostic module (6) designed to detect a determined number of operating faults of the actuator and to deliver for each of these faults a signal representative of the fault detected,
- the computer (7) comprising a memory (12) and being designed to write in this memory (12) the fault signal of a number of operating faults of the actuator less than the determined number of faults that the module (6) can be detected, **characterized in that** the unit (6) of diagnosis comprises the signal generating means required for the implementation of a method according to any one of claims 1 to 4.

9. Vehicle (1) **characterized in that** it comprises an assembly according to claim 8, the electric actuator being a module comprising a fuel pump (5).
